Europäisches Patentamt

European Patent Office

Office européen des brevets

(11) Publication number: **0 404 950 A1**

## EUROPEAN PATENT APPLICATION
### published in accordance with Art. 158(3) EPC

(21) Application number: 89907829.9

(22) Date of filing: 30.06.89

(86) International application number:
PCT/JP89/00663

(87) International publication number:
WO 90/00764 (25.01.90 90/03)

(30) Priority: 08.07.88 JP 169115/88

(43) Date of publication of application:
02.01.91 Bulletin 91/01

(84) Designated Contracting States:
DE FR GB

(51) Int. Cl.⁵: **G05B 19/403**, G05B 19/405

(71) Applicant: **FANUC LTD**
**3580, Shibokusa Aza-Komanba Oshinomura**
**Minamitsuru-gun Yamanashi 401-05(JP)**

(72) Inventor: **MIYATA, Mitsuto**
**2-2-4, Nanyodai**
**Hachioji-shi Tokyo 192-03(JP)**
Inventor: **MATSUMURA, Teruyuki**
**38-8, Matsugaya**
**Hachioji-shi Tokyo 192-03(JP)**
Inventor: **MURATA, Koichi**
**1-3-32-504, Nikocho**
**Fuchu-shi Tokyo 183(JP)**

(74) Representative: **Billington, Lawrence Emlyn et al**
**Haseltine Lake & Co Hazlitt House 28,**
**Southampton Buildings Chancery Laneane**
**London WC2A 1AT(GB)**

(54) INTERACTIVE NUMERICAL CONTROLLER.

(57) An interactive numerical controller which is capable of effecting the machining simulation and modifying the NC program without changing the operation mode of the numerical controller and which, therefore, is capable of easily and quickly editing an NC program while effecting the machining simulation to check the NC program. A microprocessor (20) for automatic programming of the interactive numerical controller carries out the machining simulation on the screen of a CRT display unit (40) according to an NC program that is read by a microprocessor (10) for numerical control and is stored in a memory (23). When the operator who has found a defect in the NC program inputs a program edit instruction via a manual data input device (14), the microprocessor for automatic programming stops the machining simulation and displays on the screen a new NC sentence for correcting the NC program when it is input manually. When the machining simulation is stopped, the microprocessor for numerical control does not read the NC program any more and edits the NC program using the above new NC sentence in response to the input of the new NC sentence.

# FIG.1

- 1 -

S P E C I F I C A T I O N

INTERACTIVE NUMERICAL CONTROL APPARATUS

## Technical Field

The present invention relates to an interactive numerical control apparatus having an NC program editing function, and a working simulation function by means of graphic animation.

## Background Art

An interactive numerical control apparatus is known, in which the working simulation is effected by means of graphic animation so as to enable an operator to check the quality of an NC program. In a typical interactive numerical control apparatus, an automatic programming device thereof delivers an interrogation message to an operator through a display screen, and creates an NC program on the basis of various NC data input supplied by the operator in response to the message. The NC program thus created is registered into a memory of a numerical control section of the numerical control apparatus so as to be used for controlling the operation of various machines for use with the numerical control apparatus.

In general, the quality of the NC program is checked before machine is actually operated by the use of the registered NC program. To this end, the operator sets the automatic programming mode so as to operate the numerical control apparatus under control of the automatic programming device, and further selects the animation function to effect the working simulation. At this time, the registered NC program is read out, and the working operation is simulated, in accordance with the NC program, on the display screen by means of graphic animation. The operator observes the working circumstances to check the presence or absence of excessive or deficient cutting, and of interference between the tool and chuck, etc. so as to check the quality of the NC program. If the NC program is defective, the operator changes the mode of the numerical control apparatus from the automatic programming mode to the NC mode so as to operate the numerical control apparatus under control of the numerical control section, and then corrects the NC program. After the mode is again changed from the NC mode to the automatic programming mode, the working simulation with respect to the corrected NC program is effected to check the quality of the program.

As described above, according to the conventional interactive numerical control apparatus, it is necessary to frequently change the operation mode of the numerical control apparatus when the NC program is corrected while the working simulation is being effected.

### Disclosure of the Invention

An object of the present invention is to provide an interactive numerical control apparatus, which is capable of effecting the working simulation and correction of an NC program by means of graphic animation without the need of changing the operation mode of the numerical control apparatus, so that the NC program can be easily and rapidly edited while the working simulation for checking the quality of the NC program is being effected.

In order to achieve the above object, the interactive numerical control apparatus of the present invention comprises: a display device; a numerical control section for reading out and delivering an NC program; an automatic programming device arranged for signal transfer between itself and the numerical control section, for receiving the NC program supplied from the numerical control section to effect working simulation in accordance with the NC program on a screen of the display device; instruction means for supplying a program edit command; and input means for inputting a new NC sentence; wherein the automatic programming device interrupts the working simulation in response to the program edit command, and, in response to input of the new sentence, the numerical control section causes an NC sentence of the NC program corresponding to the new NC sentence to be replaced by the new NC sentence, so as to edit the NC program.

As described above, according to the present invention, since the working simulation is interrupted when the program edit command is supplied while the working simulation is being effected by the automatic programming device in accordance with the NC program supplied from the numerical control section, and, in response to input of the new NC sentence, the NC program is edited by using the new NC sentence by means of the numerical control section, the working simulation and edition of the NC programming can be effected without the need of changing the operation mode of the numerical control apparatus, thus enhancing the programming efficiency.

Brief Description of the Drawings

Fig. 1 is a block diagram showing an essential part of an interactive numerical control apparatus according to an embodiment of the present invention;

Fig. 2 is a flowchart of a working simulation and NC program edition processing program executed by a numerical control microprocessor of Fig. 1;

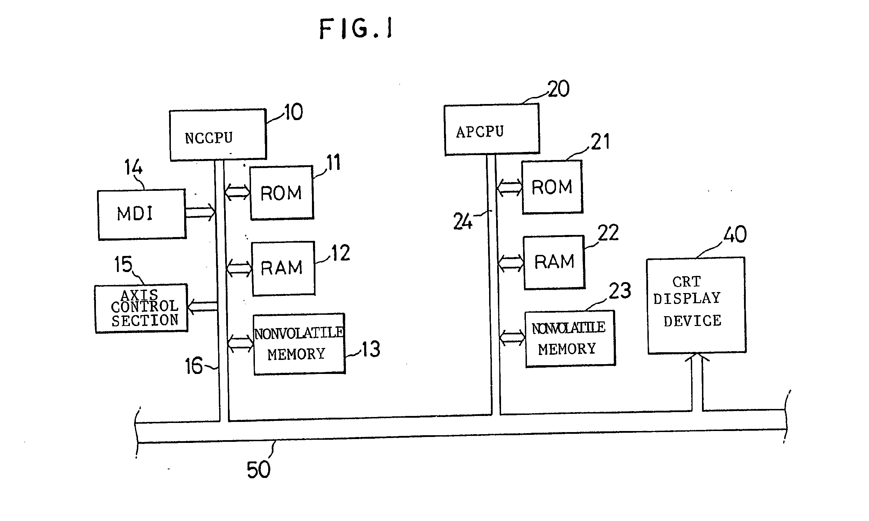

Fig. 3 is a flowchart of a working simulation and NC program edition processing program executed by an

- 4 -

automatic programming microprocessor of Fig. 1;

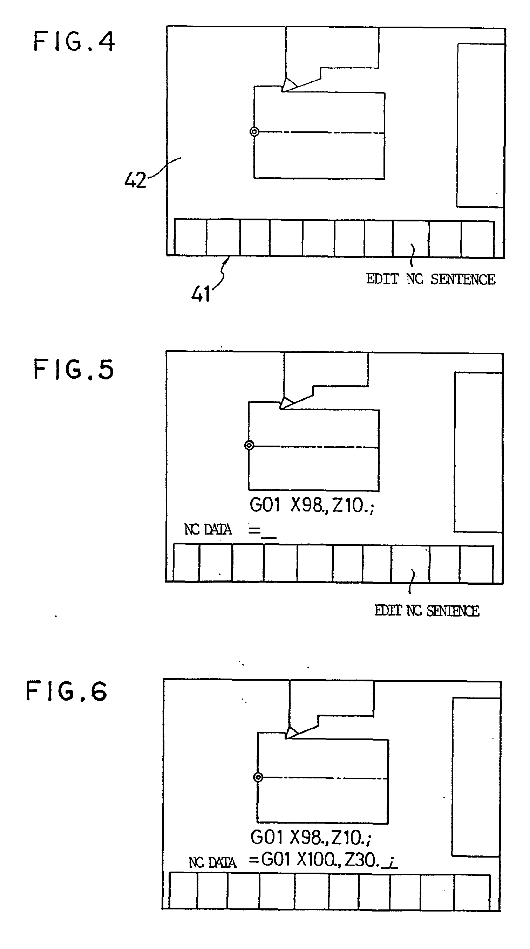

Fig. 4 is a diagram showing, by way of example, simulation of a cutting process displayed on a screen of a CRT display device of Fig. 1;

Fig. 5 is a diagram showing an example of display of an NC sentence, which is being executed when an NC sentence edit command is supplied;

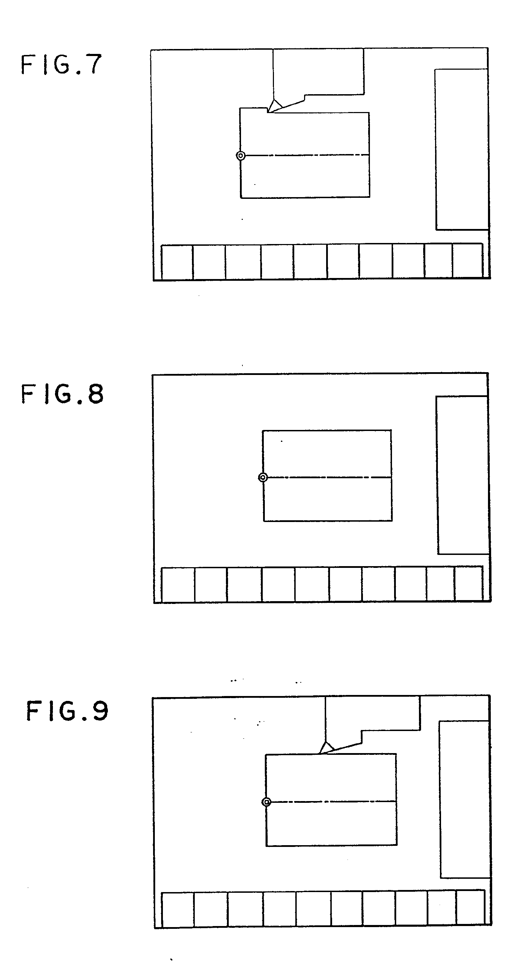

Fig. 6 is a diagram showing an example of display of a new NC sentence;

Fig. 7 is a diagram showing a display screen upon supply of the new NC sentence;

Fig. 8 is a diagram showing an initialized display screen just after completion of an NC program editing operation; and

Fig. 9 is a diagram showing a display screen just after the start of the working simulation effected in accordance with the edited NC program.

Best Mode of Carrying Out the Invention

Referring to Fig. 1, the interactive numerical control apparatus according to an embodiment of the present invention includes a numerical control microprocessor (hereinafter, referred to as an NCCPU) 10 and an automatic programming microprocessor (hereinafter, referred to as an APCPU) 20, and is connected in control relation with an NC machine tool (not shown).

A ROM 11 storing a control program for controlling the whole of the numerical control apparatus, a RAM 12 for temporal storage of data, etc., and nonvolatile memory 13 for storing an NC program, various parameters, etc., are connected to the NCCPU 10 via a bus 16. These elements 11 to 13 cooperate with the NCCPU 10 to constitute a numerical control section. The nonvolatile memory 13 consists of a battery backup RAM, for instance. Connected to the NCCPU 10 via a bus 16 are: a manual data input device (hereinafter, referred to as an MDI) 14 which is used by an operator to input various commands, data, preset values, etc.; and an axis control section 15 for controlling the drive of individual servo motors (not shown) of the NC machine tool. The bus 16 is connected to a common bus 50. Further, the ROM 11, RAM 12 and nonvolatile memory 13 are respectively provided with memory areas which are accessible from the APCPU 20 in a window fashion.

Connected to the APCPU20 via a bus 24 are: a ROM 21 storing a program for automatic programming; a RAM 22 for temporal storage of data, etc.; and a nonvolatile memory 23 storing, for instance, a tool file which contains tool data necessary for automatic programming. These elements 21 to 23 cooperate with the APCPU 20 to constitute an automatic programming device. The bus 24 is connected to the common bus 50. The ROM 21, RAM 22, and nonvolatile memory 23 are respectively provided with memory areas which are accessible from the NCCPU 10 in a window fashion. Further, connected to the common bus 50 are: a CRT display device 40 having various keys including software keys (denoted by reference numeral 41 in Fig. 4) and a CRT display screen (denoted by reference numeral 42 in Fig. 4), for effecting graphic animation as the working simulation; and a programmable machine controller, not shown.

In the following, the operation of the interactive numerical control apparatus with the above construction will be now explained.

When an operator sets the numerical control apparatus into the programming mode by the use of the MDI 14, the APCPU 20 executes the automatic programming

- 6 -

program stored in the ROM 21, creates an NC program on the basis of various data such as the size and shape of a material and the shape of a product, which are supplied via the MDI 14 by the operator in response to various interrogation messages displayed on the screen of the CRT display device 40, and supplies the thus created program to the nonvolatile memory 13 of the numerical control section. During the preparation of the NC program in the automatic programming mode, the operator is enabled to correct the program, where required.

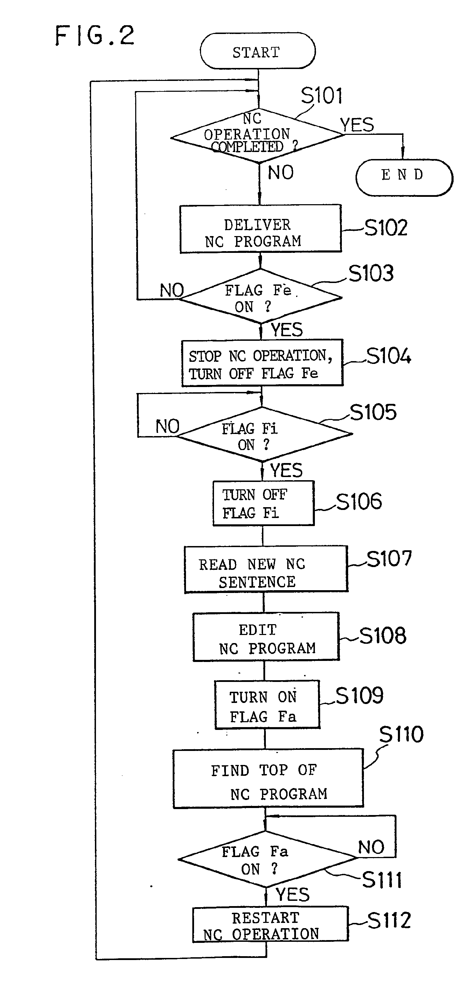

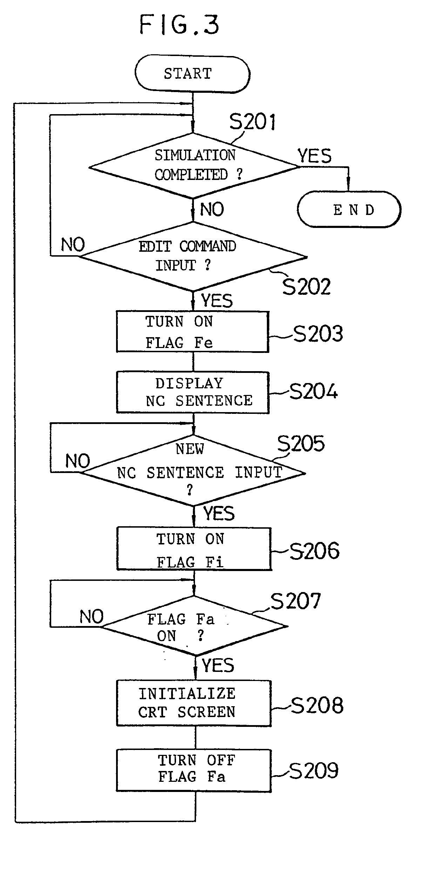

When the working simulation function is selected by the operator from the menu (not shown) displayed on the screen of the CRT display device 40, the shape of the material is displayed on the screen on the basis of the material data supplied during the preparation of the NC program (Fig. 8). Whereupon, the top of the NC program is found by the NCCPU 10, and at the same time the operator sets the machine lock mode so as to prevent the actual operation of the NC machine tool. Meanwhile, the machine is permitted to be driven, where required. Next, the NCCPU 10 and the APCPU 20 cooperate with each other to effect the working simulation and NC program edit process shown in Figs. 2 and 3.

That is, when the operator operates a predetermined software key of the MDI 14 to input a program check command and causes the NC operation in the machine lock mode to start, the NCCPU 10 determines at step S101 of Fig. 2 that the NC operation is not completed since the NC operation has just started. Then, the NCCPU reads, block by block, the NC program registered in the nonvolatile memory 13 therefrom and writes the same into the RAM 22, to thereby deliver the NC program to the automatic programming device side (step S102). The APCPU 20 executes the working simulation by means of graphic animation on the screen of the CRT display device 40 in accordance with the NC program written into the RAM 22. Fig. 4 shows, by way of example, the simulation of a cutting process corresponding to T-code command. The operator observes the working circumstances in light of the working simulation, and operates a predetermined software key to input an NC sentence edit command when a defect such as an excessive or deficient cut is detected.

During the working simulation, the APCPU 20 monitors whether the working simulation is completed or not, and whether an NC sentence edit command is input or not (steps S201 and S202 in Fig. 3). When the NC sentence edit command is supplied, the APCPU 20 interrupts the process of the working simulation, and turns on an edit flag Fe provided in the RAM 22 and indicating that the NC program edit process is in progress (step S203). Then, the APCPU causes the CRT display device 40 to display, on its screen, the NC sentence described in a block which is being executed at the time the command is supplied (step S204). Fig. 5 shows an example in which the sentence "G01X98. , Z10. ;" is displayed. Whereupon, the operator operates the MDl 14 to input a new NC sentence so as to correct the NC program. In response to the input of the new NC sentence (step S205), the APCPU 20 turns on a key-in flag Fi provided in the RAM 22 and representing the input of the new NC sentence (step S206), and causes the RAM 22 to store the new NC sentence which is then displayed. Fig. 6 shows an example in which the sentence "G01X100. , Z30. ;" is displayed.

During the execution of the aforesaid process, the NCCPU 10, which monitors the edit flag Fe at the step S103 of Fig. 2, causes the NC operation in the machine lock mode to stop, without reading the next block of the NC program, when it detects that the flag Fe is turned on. Then, the NCCPU turns off the edit flag Fe (step S104). Thereafter, upon detection, at step S105, of the key-in flag Fi indicating the input of a new NC sentence being turned on, the NCCPU 10 turns off the flag Fi (step S106), and then reads out a new sentence such as "G01X100. , Z30. ;" from the RAM 22 (step S107). Whereupon, the NCCPU writes the new NC sentence into the nonvolatile memory 13, so that an NC sentence such as "G01X98. , Z10. ;" contained in the NC program stored in the nonvolatile memory 13 and corresponding to the new NC sentence is replaced by the new NC sentence, to thereby edit the NC program (step S108). Next, the NCCPU 10 turns on an edition end flag Fa provided in the RAM 22 (step S109), and then finds the top of the NC program (step S110).

Upon detection, at step S207, of the edition end flag Fa being turned off, the APCPU 20 causes the CRT display device 40 to initialize its screen (step S208). That is, the screen shown in Fig. 7 at the time of input of the new NC sentence is changed over to the material shape displaying screen shown in Fig. 8 and appeared before the start of the working operation. Whereupon, the edition end flag Fa is turned off (step S209), and then the step S201 is entered to effect the working simulation with respect to the edited NC program. Fig. 9 shows the display screen at the start of the working simulation for the edited NC program.

When it is detected at step S111 that the edition end flag Fa is turned off, the NCCPU 10 starts the NC

- 9 -

operation again in order to effect the NC operation in accordance with the edited NC program (step S112). Then, the step S101 is entered.

The present invention is not limited to the above embodiment, but may be variously modified. For example, in the above embodiment, when the NC edit command is supplied, the NC sentence executed at that time is displayed. Alternatively, such display may be always made so as to display the NC sentence which is being executed.

- 10 -

CLAIMS

1. An interactive numerical control apparatus, comprising:

a display device;

a numerical control section for reading out and delivering an NC program;

an automatic programming device arranged for signal transfer between itself and the numerical control section, for receiving said NC program supplied from said numerical control section to effect working simulation in accordance with said NC program on a screen of said display device;

instruction means for supplying a program edit command; and

input means for inputting a new NC sentence;

wherein said automatic programming device is responsive to said program edit command to interrupt said working simulation, and said numerical control section is responsive to said program edit command to cause an NC sentence of said NC program corresponding to said new NC sentence to be replaced by said new NC sentence, to thereby edit said NC program.

2. An interactive numerical control apparatus according to claim 1, wherein said automatic programming device includes a first memory having a memory area accessible from said numerical control section for storing flag information representing input of said new NC sentence, and a memory area into which an NC program read out by said numerical control section is written by means of said numerical control section; said numerical control section including a second memory accessible from said automatic programming device for registering an NC program; and said numerical control section responsive to writing of said flag information into said first memory, to cause an NC sentence, corresponding to said new NC sentence, of said NC program registered in said second memory, to be replaced by said new NC sentence.

3. An interactive numerical control apparatus according to claim 1, wherein said numerical control section is operable to read out and deliver said NC program, block by block; and said automatic programming device is operable to cause said display device to display, on its screen, an NC sentence described in a block which is associated with the working simulation effected when said program edit command is delivered.

# FIG.1

EP 0 404 950 A1

FIG.2

```
                        ┌──────────┐
                        │  START   │
                        └──────────┘
                              │
                              │        S101
                        ◇─────────────◇
                        │     NC      │  YES
                        │  OPERATION  │──────────┐
                        │ COMPLETED ? │          │
                        ◇─────────────◇          ▼
                           │ NO             ┌──────────┐
                           │                │  E N D   │
                           ▼                └──────────┘
                    ┌──────────────┐
                    │   DELIVER    │──── S102
                    │  NC PROGRAM  │
                    └──────────────┘
                           │          S103
          NO        ◇─────────────◇
       ┌────────────│   FLAG Fe   │
       │            │    ON ?     │
       │            ◇─────────────◇
       │                 │ YES
       │                 ▼
       │         ┌──────────────────┐
       │         │ STOP NC OPERATION,│──── S104
       │         │  TURN OFF FLAG Fe │
       │         └──────────────────┘
       │                 │          S105
       │   NO     ◇─────────────◇
       │ ┌────────│   FLAG Fi   │
       │ │        │    ON ?     │
       │ │        ◇─────────────◇
       │ │             │ YES
       │ │             ▼
       │ │     ┌──────────────┐
       │ │     │  TURN OFF    │──── S106
       │ │     │   FLAG Fi    │
       │ │     └──────────────┘
       │ │            │
       │ │            ▼
       │ │     ┌──────────────┐
       │ │     │ READ NEW NC  │──── S107
       │ │     │  SENTENCE    │
       │ │     └──────────────┘
       │ │            │
       │ │            ▼
       │ │     ┌──────────────┐
       │ │     │    EDIT      │──── S108
       │ │     │  NC PROGRAM  │
       │ │     └──────────────┘
       │ │            │
       │ │            ▼
       │ │     ┌──────────────┐
       │ │     │  TURN ON     │──── S109
       │ │     │   FLAG Fa    │
       │ │     └──────────────┘
       │ │            │          S110
       │ │     ┌──────────────┐
       │ │     │ FIND TOP OF  │
       │ │     │  NC PROGRAM  │
       │ │     └──────────────┘
       │ │            │
       │ │            ▼
       │ │      ◇─────────────◇
       │ │      │  FLAG Fa    │  NO
       │ │      │   ON ?      │──────────
       │ │      ◇─────────────◇   S111
       │ │           │ YES
       │ │           ▼
       │ │     ┌──────────────┐
       │ │     │  RESTART     │──── S112
       │ │     │ NC OPERATION │
       │ │     └──────────────┘
       │ │            │
       └─┴────────────┘
```

# FIG.3

```
                        ┌─────────────┐
                        │    START    │
                        └──────┬──────┘
                               │
         ┌─────────────────────┤
         │                     │  S201
         │              ◇◇◇◇◇◇◇◇◇◇◇◇◇◇         YES    ┌─────────┐
         │             ◇  SIMULATION  ◇ ─────────────│  E N D  │
         │              ◇  COMPLETED ? ◇              └─────────┘
         │               ◇◇◇◇◇◇◇◇◇◇◇◇◇
         │                    │ NO
         │                    │
         │    NO       ◇◇◇◇◇◇◇◇◇◇◇◇◇◇
         ├────────────◇  EDIT COMMAND  ◇
         │             ◇    INPUT ?    ◇
         │              ◇◇◇◇◇◇◇◇◇◇◇◇◇   S202
         │                    │ YES
         │            ┌───────────────┐
         │            │    TURN ON     │  S203
         │            │    FLAG Fe      │
         │            └───────┬───────┘
         │            ┌───────────────┐
         │            │    DISPLAY     │  S204
         │            │   NC SENTENCE   │
         │            └───────┬───────┘
         │                    │               S205
         │    NO        ◇◇◇◇◇◇◇◇◇◇◇◇◇◇
         ├────────────◇     NEW      ◇
         │            ◇ NC SENTENCE INPUT◇
         │             ◇      ?       ◇
         │              ◇◇◇◇◇◇◇◇◇◇◇◇◇
         │                    │ YES
         │            ┌───────────────┐
         │            │    TURN ON     │  S206
         │            │    FLAG Fi      │
         │            └───────┬───────┘
         │                    │               S207
         │    NO        ◇◇◇◇◇◇◇◇◇◇◇◇◇◇
         ├────────────◇   FLAG Fa     ◇
         │             ◇    ON  ?      ◇
         │              ◇◇◇◇◇◇◇◇◇◇◇◇◇
         │                    │ YES
         │            ┌───────────────┐
         │            │  INITIALIZE    │  S208
         │            │  CRT SCREEN     │
         │            └───────┬───────┘
         │            ┌───────────────┐
         │            │   TURN OFF     │  S209
         │            │   FLAG Fa       │
         │            └───────┬───────┘
         └────────────────────┘
```

**FIG.4**

42

41

EDIT NC SENTENCE

**FIG.5**

G01 X98.,Z10.;

NC DATA =__

EDIT NC SENTENCE

**FIG.6**

G01 X98.,Z10.;
NC DATA =G01 X100.,Z30._i

FIG.7

FIG.8

FIG.9

# INTERNATIONAL SEARCH REPORT

International Application No PCT/JP89/00663

**I. CLASSIFICATION OF SUBJECT MATTER** (if several classification symbols apply, indicate all) [6]

According to International Patent Classification (IPC) or to both National Classification and IPC

Int. Cl$^4$  G05B19/403, 19/405

**II. FIELDS SEARCHED**

| Minimum Documentation Searched [7] | |
|---|---|
| Classification System | Classification Symbols |
| IPC | G05B19/403, 19/405 |

Documentation Searched other than Minimum Documentation
to the Extent that such Documents are Included in the Fields Searched [8]

Jitsuyo Shinan Koho          1971 – 1989
Kokai Jitsuyo Shinan Koho    1971 – 1989

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| Y | JP, A, 62-121511 (Mitsubishi Electric Corporation) 2 June 1987 (02. 06. 87) Page 3, upper left column, line 11 to lower left column, line 18 (Family : none) | 1 – 3 |
| Y | JP, A, 61-170807 (Yamazaki Tekkosho Kabushiki Kaisha) 1 August 1986 (01. 08. 86) Page 2, lower left column, line 6 to page 5, lower right column, line 17 (Family : none) | 1 – 3 |
| Y | JP, A, 63-24307 (Fanuc Ltd.) 1 February 1988 (01. 02. 88) Page 5, upper left column, line 19 to page 6, upper right column, line 6 | 1 – 3 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| September 13, 1989 (13. 09. 89) | September 25, 1989 (25. 09. 89) |
| International Searching Authority | Signature of Authorized Officer |
| Japanese Patent Office | |

Form PCT/ISA/210 (second sheet) (January 1985)